# FASCICULE DE BREVET EUROPEEN

(11) **EP 4 200 976 B1**
(45) Date de publication et mention de la délivrance du brevet: **07.08.2024**
(21) Numéro de dépôt: 21782772.4
(22) Date de dépôt: 17.08.2021
(51) Int. Cl.: H01L 27/146

(54) **DISPOSITIF ET PROCÉDÉ POUR DÉTERMINER ET UTILISER UN SURPLUS DE PUISSANCE ÉLECTRIQUE DISPONIBLE GÉNÉRÉ PAR UN GÉNÉRATEUR SOLAIRE PHOTOVOLTAÏQUE**
VORRICHTUNG UND VERFAHREN ZUR BESTIMMUNG UND VERWENDUNG EINES ÜBERSCHUSSES AN VERFÜGBARER, VON EINEM SOLARFOTOVOLTAISCHEN GENERATOR ERZEUGTER ELEKTRISCHER ENERGIE
DEVICE AND METHOD FOR DETERMINING AND USING A SURPLUS OF AVAILABLE ELECTRICAL POWER GENERATED BY A SOLAR PHOTOVOLTAIC GENERATOR

(30) Priorité: 19.08.2020 FR 2008557
(43) Date de publication de la demande: 28.06.2023
(73) Titulaire: GLOBAL INVENTIONS, 13790 Rousset (FR); Gilbert, Joel, 83560 Saint Julien (FR)
(72) Inventeur: NONNENMACHER, Bernard, 13790 ROUSSET (FR); GILBERT, Joel, 83560 SAINT JULIEN (FR)
(74) Mandataire: Nicolle, Olivier
(86) Numéro de dépôt international: PCT/FR2021/000094
(87) Numéro de publication internationale: WO 2022/038319

(56) Documents cités:
- KR-A- 20190 072 084
- US-A1- 2009 000 659
- US-A1- 2015 280 644
- US-A1- 2016 315 584

## Description

### DOMAINE DE L'INVENTION

La présente invention se rapporte au domaine de l'énergie solaire photovoltaïque et plus particulièrement au domaine de la gestion de cette énergie afin d'optimiser la production, le stockage et l'utilisation de l'énergie électrique qui peut être produite à partir de l'énergie solaire.

### ETAT DE LA TECHNIQUE

De façon connue, un dispositif de production d'énergie électrique par des panneaux solaires photovoltaïques comprend en général un ensemble de panneaux photovoltaïques associés entre eux pour produire une tension et un courant électriques aptes à alimenter soit des appareils électriques pour un usage immédiat de l'énergie électrique, soit des batteries qui permettent le stockage momentané de cette énergie électrique pour un usage différé dans le temps. En effet l'irradiation solaire est très variable et est fonction, entre autres, des heures de la journée, de l'ensoleillement et des saisons.

Il est alors nécessaire de gérer au mieux l'énergie électrique solaire générée pour, d'une part, alimenter les appareils en fonction de leur puissance électrique de consommation, et d'autre part pour stocker l'énergie électrique d'origine solaire non utilisée afin de l'utiliser à d'autres moments, notamment la nuit. Cette gestion est assurée en général d'une manière automatique par un boîtier électrique de type onduleur qui convertit le courant continu de l'énergie photovoltaïque issue d'un panneau solaire en courant alternatif. L'onduleur redirige alors l'énergie photovoltaïque vers des appareils électriques connectés aptes à fonctionner sur le moment, ou vers un dispositif de stockage comme des batteries électriques ou encore comme une réserve d'eau que l'on chauffe et qui est alors utilisée comme moyen de stockage thermique d'énergie. Une autre option rémunératrice est la vente du courant électrique généré mais non utilisé localement, par son injection par l'onduleur dans un réseau électrique public.

Mais les dispositifs connus de gestion en temps réel de l'énergie électrique d'origine solaire disponible ne permettent pas de déterminer et gérer la puissance potentiellement disponible, au-delà de celle qui est consommée à un instant donné par les appareils électriques connectés à l'onduleur. Cette gestion nécessiterait la détermination en continu de la valeur de puissance potentiellement disponible, soit par mesure directe soit par calcul, ce qui n'est pas réalisé dans l'état actuel de la technique. En effet, la majorité des boîtiers existants dont la fonction est de gérer le surplus d'énergie solaire non consommée ne font que détecter et détourner au profit d'un appareil local prédéterminé le courant que l'onduleur prévoit d'injecter dans le réseau public. D'un point de vue pratique, un capteur de courant électrique est placé autour du fil électrique qui permet l'injection dans le réseau public afin de mesurer l'intensité du courant électrique sortant vers le réseau public, donc la présence d'un surplus de production d'énergie photovoltaïque par rapport à celle consommée localement à un instant donné. Ce test en continu permet de rediriger le surplus existant d'énergie électrique vers le réseau public d'électricité.

Toutefois certains systèmes photovoltaïques ne sont pas reliés à un réseau public et sont donc complètement isolés électriquement, ce qui ne permet pas en l'état actuel de la technique de mesurer le surplus d'énergie électrique disponible et donc ne permet pas de l'utiliser ou de le stocker électriquement ou thermiquement, de sorte que ce surplus d'énergie électrique disponible est alors perdu.

Pour les systèmes photovoltaïques en site isolé ou « Off Grid » en terminologie anglo-saxonne, il n'y a pas d'injection possible du courant électrique dans un réseau électrique public. La présence d'un surplus d'énergie photovoltaïque par rapport à la consommation instantanée du site de consommation est alors détectée lors de la charge d'une batterie, ce qui indique en effet que la puissance photovoltaïque instantanée disponible est supérieure à la puissance instantanée consommée par les appareils électriques connectés au site isolé.

Cette indication de l'existence d'un surplus de puissance permet alors de mettre en parallèle le fonctionnement d'un dispositif de stockage thermique de ce surplus d'énergie électrique, par exemple en alimentant la résistance électrique d'un chauffe-eau par l'intermédiaire d'un gradateur de puissance qui fait varier automatiquement la puissance de consommation dudit chauffe-eau proportionnellement à la puissance électrique photovoltaïque disponible en surplus. Cet automatisme prend en général en compte le niveau de charge de la batterie utilisée ainsi que les paramètres de charge de celle-ci, de manière à optimiser l'opération de stockage thermique en fonction du niveau de charge de la batterie.

Comme les systèmes photovoltaïques avec injection du courant dans un réseau public, les systèmes photovoltaïques en site isolé sans injection de courant dans un réseau public nécessitent de multiples capteurs de fonctionnement, notamment au niveau de la batterie de stockage du surplus d'énergie et/ou des caractéristiques de charge de ladite batterie, ce qui implique alors d'avoir des commandes électroniques qui s'adaptent à chaque type de batterie. Ces contraintes rendent ces dispositifs connus très complexes et assez coûteux.

On connaît par le document US 2009/000659 A1 un dispositif de caractérisation ou de diagnostic de dispositifs photovoltaïques, afin de déterminer les dysfonctionnements susceptibles d'affecter de tels dispositifs au cours de leur cycle de vie. A cet effet, ce dispositif de caractérisation est destiné à être branché aux bornes d'un dispositif photovoltaïque et est pourvu d'une série de capteurs, notamment de température, de tension et de courant électrique, et d'une mémoire stockant un ensemble de paramètres de fonctionnement qui correspondent à des dysfonctionnements prédéterminés tels qu'un court-circuit, l'influence d'un ombrage ou autre facteur affectant la production d'énergie solaire. Les mesures fournies par le dispositif de diagnostic sont alors comparées à celles mémorisées, ce qui permet de poser un diagnostic plus rapide et plus efficace du dysfonctionnement en cause. Une cellule photovoltaïque témoin peut également être connectée en entrée du dispositif de diagnostic afin de comparer le rendement de production de cette cellule témoin au rendement de production mesuré aux bornes du dispositif photovoltaïque, aux seules fins de détecter un dysfonctionnement, sans toutefois pouvoir déterminer un éventuel surplus de puissance photovoltaïque disponible.

On connaît par le document KR 2019 00720084 A un système de plusieurs générateurs photovoltaïques connectés à un réseau de distribution électrique, ce système étant configuré pour pouvoir détecter un dysfonctionnement local de l'un des générateurs photovoltaïques, et en conséquence pour pouvoir adapter la génération de puissance photovoltaïque des autres générateurs photovoltaïques de manière à « stabiliser » le réseau électrique, c'est-à-dire de faire en sorte qu'un dysfonctionnement localisé d'un générateur ne crée pas de perturbations d'alimentation perceptibles par les utilisateurs connectés au réseau électrique.

### BUT DE L'INVENTION

Un but de l'invention est de proposer un nouveau dispositif particulièrement simple et économique de détermination en temps réel du surplus d'énergie électrique d'origine photovoltaïque qui n'est pas utilisé par les appareils connectés d'un site de consommation à un instant donné, afin de pouvoir utiliser ou stocker ce surplus d'énergie, par exemple sous forme électrique, thermique ou chimique.

Un autre but de l'invention est de proposer un dispositif qui soit indépendant du type de batterie utilisée pour stocker le surplus d'énergie, et qui permette une gestion simplifiée des priorités de fonctionnement des appareils connectés, notamment en fonction de leur puissance de consommation.

Un autre but de l'invention est de proposer un dispositif qui soit capable de mettre en service et d'alimenter des appareils électriques ou systèmes de stockage d'énergie supplémentaires, de manière à optimiser l'utilisation ou le stockage du maximum de surplus d'énergie électrique photovoltaïque disponible à chaque instant et non utilisé par les appareils électriques normalement connectés.

### RESUME DE L'INVENTION

Dans son principe, le dispositif objet de cette invention comprend d'une manière innovante un dispositif (S) capable de déterminer en continu, par mesure ou par calcul, d'une part la puissance maximale potentielle, notée P1, que peut fournir un ensemble de panneaux solaires photovoltaïques (PV) d'un système de générateur photovoltaïque (G) en fonction de l'ensoleillement à un instant donné t, et d'autre part le surplus de puissance disponible, noté P3, par rapport à la puissance consommée à cet instant t par les appareils électriques en service, notée P2.

Par puissance maximale potentielle P1 on entend ici non pas la puissance maximale que pourrait théoriquement produire le générateur photovoltaïque dans le cadre d'un ensoleillement optimal, qui est une valeur fixe appelée puissance « crête », mais la puissance maximale réelle que peut produire ledit générateur à chaque instant t compte tenu de l'ensoleillement réel à cet instant, qui est donc par essence une valeur qui varie en fonction du temps. On entend par puissance « crête » la puissance électrique maximale que peut générer un panneau solaire photovoltaïque lorsqu'il est irradié par une lumière solaire de 1000 W/m² et lorsque ce rayonnement est perpendiculaire à sa surface. En général ledit panneau solaire ne reçoit qu'une partie du rayonnement solaire maximum car ce rayonnement est filtré par l'atmosphère qui est plus ou moins nuageuse, et l'angle d'incidence dudit rayonnement varie avec l'heure de la journée.

L'invention porte également sur la mise en oeuvre de ce dispositif (S) dans un système de générateur photovoltaïque (G) pour utiliser ou stocker le surplus de puissance P3 disponible à un instant t et non utilisée.

Le système de générateur photovoltaïque (G) comprend un ensemble de panneaux solaires photovoltaïques (PV) aptes à produire à un instant t une puissance électrique maximale notée P1. Cette puissance électrique P1 est en partie fonction de l'intensité du rayonnement solaire reçu à cet instant t et de la puissance « crête » desdits panneaux solaires (PV).

Ledit générateur photovoltaïque (G) comprend aussi :
- plusieurs appareils électriques (A) alimentés par l'énergie électrique des panneaux solaires (PV). Ces appareils électriques (A) consomment à cet instant t une puissance électrique totale mesurée qui vaut P2 et qui est inférieure à P1.
- un dispositif (S) de mesure ou de calcul de la puissance électrique photovoltaïque P3 qui reste disponible à la consommation à cet instant t et qui vaut approximativement P3 = P1 - P2.

L'invention a par conséquent pour premier objet un dispositif (S) de gestion d'un surplus (P3) de puissance photovoltaïque disponible aux bornes d'un générateur photovoltaïque (DE) pourvu de panneaux photovoltaïques (PV) susceptibles d'alimenter des appareils électriques (AF) à puissance fixe et des appareils électriques (AV) à puissance variable connectés audit générateur photovoltaïque (DE), ledit surplus de puissance (P3) étant égal à la différence à chaque instant t entre la puissance électrique maximale potentielle (P1) que pourrait produire ledit générateur photovoltaïque (DE) compte tenu de son éclairage et la puissance électrique (P2) réellement consommée à chaque instant t par lesdits appareils électriques (AF, AV), caractérisé en ce qu'il comporte :
- un capteur photoélectrique témoin (PE) apte à mesurer à chaque instant t l'intensité lumineuse solaire reçue par lesdits panneaux photovoltaïques (PV) et à en déduire ladite puissance électrique maximale potentielle (P1) ;
- un moyen (MP3) de détermination du surplus de puissance (P3) disponible par comparaison à cet instant t entre la valeur de la puissance électrique maximale potentielle (P1) et la valeur de la puissance électrique (P2) réellement consommée par lesdits appareils électriques (AF ; AV) ;
- et un moyen (MPG) de gestion dudit surplus de puissance (P3) disponible, configuré pour rediriger et répartir entre lesdits appareils électriques (AF, AV) ledit surplus de puissance (P3) disponible.

Selon un mode de réalisation, ledit moyen (MPG) de gestion du surplus de puissance (P3) est configuré pour commander la mise en service et l'alimentation en électricité d'au moins un appareil électrique (AF) supplémentaire, ou l'augmentation de la consommation d'un appareil électrique (AF, AV) déjà connecté au générateur photovoltaïque (DE).

Cette disposition permet de maximiser l'usage dudit surplus de puissance (P3) disponible aux bornes du générateur photovoltaïque (DE), en augmentant la puissance (P2) consommée ou stockée par des appareils électriques.

Selon un mode de réalisation, le capteur photoélectrique témoin (PE) est configuré pour mesurer l'intensité lumineuse solaire reçue par lesdits panneaux photovoltaïques (PV) et pour produire un courant électrique proportionnel à ladite intensité lumineuse et donc proportionnel à la puissance maximale potentielle (P1) que pourrait produire le générateur photovoltaïque (DE) à chaque instant t.

Selon des modes de réalisation, ledit capteur photoélectrique témoin (PE) peut être constitué par une photorésistance, un phototransistor, une photodiode, un pyranomètre, ou de préférence par une surface photovoltaïque témoin (V).

Dans le cas préférentiel où ledit capteur photoélectrique témoin (PE) est constitué par une surface photovoltaïque (V), celle-ci peut être formée par une seule cellule photovoltaïque ou par plusieurs cellules photovoltaïques connectées en série ou en parallèle, de taille globale inférieure à celle desdits panneaux photovoltaïques (PV), et orientée parallèlement à la surface des panneaux photovoltaïques (PV) de manière à recevoir la même intensité lumineuse que les panneaux photovoltaïques (PV) et à produire une puissance électrique (P4) représentative de leur puissance maximale potentielle (P1).

La surface photovoltaïque témoin (V) est capable de capter l'énergie lumineuse ambiante qui atteint les panneaux solaires (PV). Elle doit nécessairement être indépendante des panneaux solaires photovoltaïques de production (PV), et de préférence positionnée à proximité desdits panneaux solaires (PV) pour percevoir le même ensoleillement.

Selon un mode de réalisation, ledit moyen (MP3) de détermination du surplus de puissance (P3) comprend un micro calculateur électronique qui reçoit en entrée les informations analogiques d'au moins un capteur analogique (T1, T2, T3) positionné de manière à capter les intensités électriques I(pe), I(pv) et I(pwm) qui parcourent respectivement le capteur témoin (PE), les panneaux photovoltaïques (PV) et les appareils électriques (AF, AV), ledit micro calculateur électronique (MP3) étant configuré pour produire un signal analogique ou numérique S(i) représentatif de la valeur du surplus (P3) de puissance disponible.

Selon un mode de réalisation avantageux, ledit moyen (MP3) de détermination du surplus de puissance (P3) disponible comporte des capteurs analogiques (T1, T2, T3) constitués par des tores à effet Hall.

Selon un mode de réalisation préféré et particulièrement simple, ledit moyen (MP3) de détermination du surplus de puissance (P3) disponible à chaque instant t comprend un capteur analogique (T) constitué par un seul tore à effet Hall traversé à la fois par un premier conducteur électrique (F2) issu des panneaux photovoltaïques (PV) et parcouru par un courant électrique I(pv), et par un second conducteur électrique (F1) issu du composant photoélectrique témoin (PE) et parcouru par un courant I(p) produit par ledit composant photoélectrique (PE) mesurant la luminosité solaire, ledit tore (T) à effet Hall produisant alors en sortie un signal électrique S(i) représentatif du surplus de puissance (P3) disponible à chaque instant t.

Selon un mode de réalisation, ledit tore (T) à effet Hall est en outre traversé par un troisième conducteur électrique (F3) parcouru par le courant I(pwm) d'alimentation des appareils électriques (AV) à puissance variable.

Selon un mode de réalisation, ledit moyen (MPG) de gestion du surplus de puissance (P3) disponible consiste en une action manuelle d'un opérateur en fonction d'une indication par le dispositif (S) de l'existence d'un surplus de puissance (P3) disponible.

En variante, ledit moyen (MPG) de gestion du surplus de puissance (P3) disponible est constitué par un automatisme électronique asservi à la valeur instantanée du surplus de puissance (P3) disponible, ledit automatisme étant configuré pour minimiser le surplus (P3) de puissance électrique disponible et maximiser la puissance électrique (P2) consommée par les appareils électriques (AF, AV).

Selon un mode de réalisation, ledit automatisme est conçu pour mettre en fonctionnement ou alimenter un ou plusieurs appareils électriques (AF, AV) dont la puissance de consommation fixe ou variable est compatible avec le surplus (P3) de puissance disponible, et pour choisir les appareils bénéficiant de tout ou partie du surplus de puissance (P3) disponible en fonction d'une grille de priorités prédéfinie par l'utilisateur.

Selon un mode de réalisation, ledit moyen (MPG) de gestion du surplus de puissance (P3) disponible comporte un circuit de commande des appareils électriques à puissance variable (AV) recevant la valeur du surplus (P3) de puissance disponible, via un émetteur (C1) et un récepteur (C2) intégrés au dispositif (S) et connectés au moyen d'une liaison de communication de nature électrique, électromagnétique ou lumineuse.

Selon un mode de réalisation, ledit circuit de commande dudit moyen (MPG) de gestion du surplus de puissance (P3) disponible est configuré pour commander la modulation de la puissance d'alimentation des appareils à puissance variable (AV), par exemple par modulation de largeur d'impulsion (PWM).

L'invention a également pour objet un système (G) comportant un générateur photovoltaïque (DE) pourvu de panneaux photovoltaïques (PV) alimentant des appareils électriques (AF) à puissance fixe ou des appareils électriques (AV) à puissance variable, caractérisé en ce qu'il comporte un dispositif (S) de gestion d'un surplus (P3) de puissance photovoltaïque disponible aux bornes d'un générateur photovoltaïque tel que décrit plus haut, de façon à maximiser l'utilisation d'un surplus (P3) de puissance photovoltaïque disponible à un instant t aux bornes dudit générateur photovoltaïque (DE).

Selon un mode de réalisation du système (G), il comporte un onduleur (D) connecté entre les panneaux photovoltaïques (PV) et lesdits appareils électriques (AF, AV), et la sortie de l'onduleur (D) est connectée aux appareils électriques (AV) à puissance d'alimentation variable via ledit dispositif (S) de gestion du surplus (P3) de puissance photovoltaïque disponible, de sorte que les appareils électriques (AV) à puissance variable soient alimentés électriquement en fonction du surplus (P3) de puissance disponible à chaque instant t.

Selon un mode de réalisation du système (G), les composants dudit dispositif de gestion (S) du surplus de puissance (P3) sont directement intégrés audit onduleur (D), à l'exception du capteur photoélectrique témoin (PE), qui reste exposé à la même lumière solaire que les panneaux photovoltaïques (PV).

Selon un mode de réalisation du système (G), les appareils électriques (AV) à puissance d'alimentation variable incluent des appareils de type pompes hydrauliques, résistances chauffantes, groupes frigorifiques, ventilateurs, générateurs d'eau atmosphérique, déshumidificateurs de locaux, batteries à flux Redox, batteries de véhicule électrique, piles à d'hydrogène.

Selon un mode de réalisation du système (G), il comporte un premier dispositif de type MPPT (« Maximum Power Point Tracking ») disposé entre les panneaux solaires (PV) et l'onduleur (D) et un second dispositif MPPT disposé entre le capteur photoélectrique témoin (PE) et le moyen (MP3) de détermination du surplus (P3) de puissance disponible.

Selon un mode de réalisation du système (G), au moins l'un desdits appareils électriques est pour une partie de type (AF) à puissance d'alimentation fixe et pour une autre partie de type (AV) à puissance d'alimentation variable, comme par exemple un générateur d'eau atmosphérique comprenant en partie un déshumidificateur atmosphérique qui condense l'eau atmosphérique dans un réservoir et qui fonctionne en mode (AV) d'alimentation à puissance variable, et comprenant pour une autre partie un système de filtration et de purification de l'eau recueillie dans ledit réservoir, et qui fonctionne en mode (AF) d'alimentation à puissance fixe.

Selon un mode de réalisation du système (G), lesdits appareils électriques (AF, AV) sont dimensionnés de façon à pouvoir consommer toute la puissance électrique potentielle (P1) produite par les panneaux photovoltaïques (PV), y compris le surplus de puissance (P3) disponible à chaque instant t. De cette manière on assure que toute la puissance électrique susceptible d'être générée par le système (G) dans toutes les conditions d'ensoleillement, sera utilisée, éliminant tout gaspillage d'énergie.

Selon un mode d'utilisation du système (G), il est disposé soit en un site isolé sans possibilité de transfert de courant électrique avec un réseau public de distribution d'énergie électrique, soit connecté à un réseau public de distribution d'énergie électrique pour permettre au besoin la réception d'un complément d'électricité de la part du réseau public de distribution d'énergie électrique ou l'injection dans ledit réseau public de tout ou partie dudit surplus de puissance (P3) mesuré ou calculé par ledit dispositif de gestion (S).

L'invention a également pour objet un onduleur apte à transformer un courant continu délivré par un générateur photovoltaïque en un courant alternatif destiné à alimenter des appareils électriques (AF, AV), caractérisé en ce qu'il intègre directement un dispositif (S) de gestion du surplus (P3) de puissance disponible, tel que décrit plus haut.

L'invention a encore pour objet un procédé de gestion d'un surplus (P3) de puissance électrique disponible aux bornes d'un générateur photovoltaïque, caractérisé en ce qu'il comporte des étapes consistant à :
- Déterminer la puissance maximale potentielle (P1) pouvant être délivrée par ledit générateur photovoltaïque à chaque instant t, en fonction de l'ensoleillement reçu à cet instant ;
- Déterminer la puissance (P2) consommée à l'instant t par l'ensemble des appareils électriques (AF, AV) connectés audit générateur photovoltaïque ;
- Déterminer un surplus de puissance (P3) disponible à l'instant t, correspondant à la différence P1 - P2 ;
- Dans le cas d'une valeur de surplus de puissance disponible (P3) positive, mettre en service et/ou alimenter électriquement au moins un appareil électrique de façon à maximiser la valeur de la puissance (P2) consommée et minimiser la valeur du surplus (P3) de puissance disponible à un instant ultérieur t + delta t.

### DECRIPTION DETAILLEE DE L'INVENTION

L'invention est maintenant décrite plus en détails à l'aide des figures, dans lesquelles :
- la figure 1 est un schéma de principe d'un système de générateur photovoltaïque (G) comportant un dispositif (S) selon l'invention pour mesurer ou calculer le surplus de puissance électrique photovoltaïque (P3) qui reste disponible à chaque instant t, au-delà de la puissance (P2) consommée à cet instant par les appareils électriques connectés;
- la figure 2 est un schéma d'un premier mode de réalisation d'un système de générateur photovoltaïque (G) de la figure 1;
- la figure 3 est un schéma d'un second mode de réalisation d'un système de générateur photovoltaïque (G) de la figure 1.

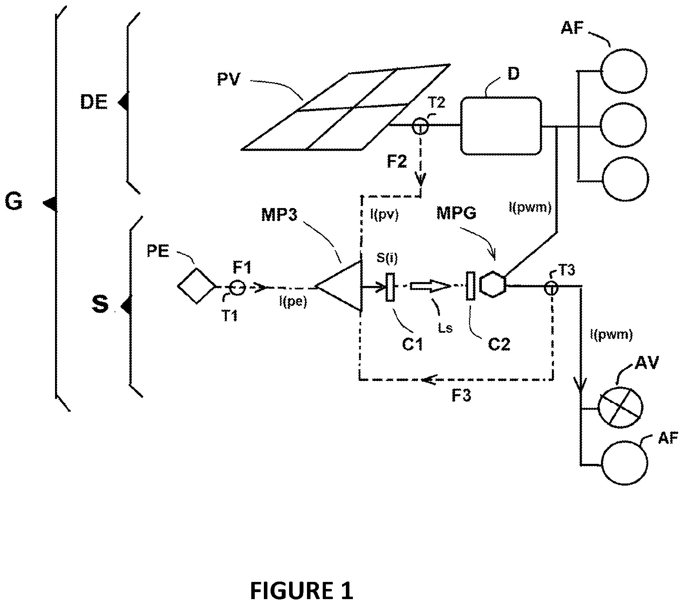

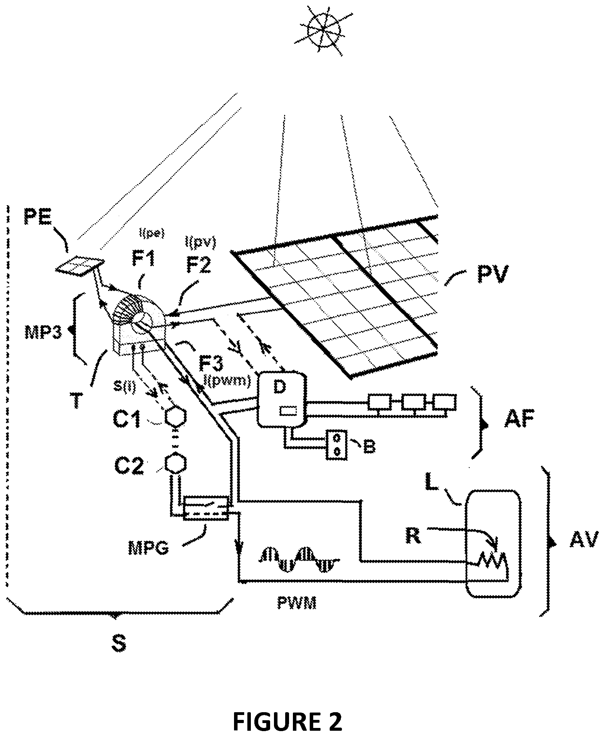

La figure 1 montre les éléments principaux du système (G) objet de l'invention. Le système (G) de production et d'utilisation d'électricité photovoltaïque comprend un ensemble de panneaux solaires photovoltaïques (PV), un onduleur (D) qui transforme le courant électrique continu fourni par les panneaux solaires (PV) en un courant alternatif qui alimente plusieurs appareils électriques (AF, AV). Parmi ces appareils électriques il y a des appareils (AF) qui nécessitent une tension, ou une intensité moyenne d'alimentation, qui doit être fixe ou relativement stable comme par exemple un ordinateur, un réfrigérateur, une machine à laver le linge, et d'autres appareils notés (AV) dont la tension ou l'intensité d'alimentation peut être variable, comme représenté en figure 2, par exemple une batterie électrique (B), un chauffe-eau (L) à résistance thermique (R), des lampes à filament ou des lampes LED d'intensité variable (dites « dimmable » en terminologie anglo-saxonne) qui sont compatibles avec une alimentation à découpage de type PWM.

Lorsque les appareils électriques à puissance fixe (AF) consomment peu d'énergie, cela signifie que la puissance P2 consommée est faible. Lorsqu'à un instant donné t les panneaux solaires (PV) ont une capacité de production électrique potentielle de P1 (telle que définie plus haut) supérieure à la puissance P2 consommée à cet instant t, il apparaît un surplus d'énergie électrique P3 = P1 - P2 qui est disponible en sortie des panneaux photovoltaïques (PV) et (aux pertes près) en sortie de l'onduleur (D). Mais ce surplus P3 de puissance disponible n'est pas consommé à cet instant par les appareils (AF), elle est donc perdue, ce qui constitue d'ailleurs une sous-exploitation de l'investissement réalisé pour la mise en place du système générateur photovoltaïque (G).

Afin de déterminer, par calcul ou par mesure, ledit surplus P3 d'énergie électrique non consommé, le système (G) comprend un dispositif (S) de détermination et de gestion de ce surplus P3.

Selon l'invention, ce dispositif (S) comporte :
- un capteur photoélectrique témoin (PE) apte à mesurer à chaque instant t l'intensité lumineuse solaire reçue par lesdits panneaux photovoltaïques (PV) et à en déduire ladite puissance électrique maximale potentielle (P1) que les panneaux peuvent générer compte tenu de leur ensoleillement ;
- un moyen (MP3) de détermination d'un surplus de puissance (P3) disponible par comparaison à cet instant t entre la valeur de la puissance électrique maximale potentielle (P1) et la valeur de la puissance électrique (P2) réellement consommée par des appareils électriques (AF) ;
- et un moyen (MPG) de gestion dudit surplus de puissance (P3) disponible, configuré pour commander soit la mise en service et l'alimentation en électricité d'au moins un appareil électrique (AF, AV) supplémentaire, soit l'augmentation de la consommation d'un appareil électrique (AF, AV) déjà connecté au générateur photovoltaïque (DE), de façon à maximiser l'usage du surplus de puissance (P3) disponible aux bornes du générateur photovoltaïque (DE), et à la rediriger et répartir entre lesdits appareils électriques (AF, AV).

Selon l'invention, ledit capteur photoélectrique témoin (PE) est configuré pour mesurer l'intensité lumineuse solaire reçue par lesdits panneaux photovoltaïques (PV) et pour produire un courant électrique proportionnel à ladite intensité lumineuse et donc proportionnel à la puissance maximale potentielle (P1) que pourrait produire le générateur photovoltaïque (DE) à chaque instant t.

Le capteur photoélectrique témoin (PE) est orienté de manière à recevoir une irradiation lumineuse proportionnelle à celle reçue par les panneaux solaires (PV), de sorte que la puissance notée P4 mesurée aux bornes du capteur photoélectrique (PE) permet par extrapolation, de calculer à l'instant t ladite puissance électrique potentielle maximale P1 des panneaux solaires (PV) et d'en déduire la valeur du surplus de puissance électrique photovoltaïque P3 qui reste disponible à la consommation à cet instant t et qui vaut approximativement P3 = P1 - P2. Cette égalité est approximative car elle ne tient pas compte par exemple des pertes électriques dues au transport du courant (effet Joule) ni des pertes en rapport avec une élévation de la température ambiante qui induit en général une diminution des performances des appareils et des composants électriques.

Une fois que la valeur de la puissance photovoltaïque potentielle maximale P1 est connue, il est facile de calculer le surplus d'énergie non consommé qui vaut P3 = P1 - P2, P2 étant la mesure de la puissance consommée par les appareils électriques.

Le capteur photoélectrique témoin (PE) peut être réalisé de diverses manières. Il peut s'agir d'une photorésistance, d'un phototransistor, d'une photodiode, ou encore d'un pyranomètre.

Mais selon un mode de réalisation particulièrement simple, économique et efficace, ledit capteur photoélectrique témoin (PE) est de préférence constitué par une surface photovoltaïque témoin (V) formée par une seule cellule ou par plusieurs cellules connectées en série ou en parallèle, de taille globale inférieure à celle desdits panneaux photovoltaïques (PV), et orientée parallèlement à la surface de ces panneaux photovoltaïques (PV) de manière à recevoir la même intensité lumineuse qu'eux. Ce capteur témoin (V) produit alors une puissance (P4) représentative de la puissance maximale potentielle (P1) des panneaux photovoltaïques (PV).

Dans la suite de la description, on considérera pour simplifier, mais sans limiter l'invention à ce mode de réalisation, que le capteur photoélectrique témoin (PE) est effectivement réalisé sous la forme d'une surface photovoltaïque (V) de taille réduite faisant office de surface photovoltaïque témoin produisant une faible puissance électrique P4, et ayant les mêmes caractéristiques de rendement que les panneaux photovoltaïques (PV) de production. Cette surface photovoltaïque (V) témoin n'a pas pour but de produire de la puissance électrique pour des appareils connectés, mais doit renseigner le système sur la puissance potentielle P1 que peuvent produire les panneaux (PV) de production à chaque instant en fonction des caractéristiques d'ensoleillement réelles.

On sait que les cellules photovoltaïques produisent une puissance électrique qui est sensiblement proportionnelle à la grandeur de leur surface. Connaissant la surface L1 des panneaux solaires (PV) et la surface L2 de la surface photovoltaïque témoin (V) du dispositif (S) de référence, on peut calculer la puissance potentielle P1 de l'ensemble des panneaux solaires (PV) qui vaut P1 = P4.(L1/L2), et d'un point de vue plus général P1 = (x.P4) + z, x et z étant des valeurs fixes dépendantes des caractéristiques géométriques et photoélectriques des panneaux (PV) et de ladite surface photovoltaïque témoin (V).

D'un point de vue pratique, les mesures et les calculs de puissances optimales de P1 et/ou de P4 se font au travers d'un dispositif dit MPPT (acronyme pour « Maximum Power Point Tracking » en terminologie anglo-saxonne) qui permet d'ajuster la tension et/ou l'intensité du courant de charge de manière à positionner les cellules photovoltaïques à leur maximum d'efficacité et donc au maximum de leur puissance. Ce dispositif MPPT peut alors éventuellement être utilisé sur le dispositif (S) pour la mesure de la puissance P4 délivrée par le capteur photovoltaïque témoin (V) et aussi sur les panneaux photovoltaïques de production (PV) pour optimiser la puissance potentielle de production P1.

Selon un mode de réalisation particulier le surplus de puissance électrique P3 disponible à un instant t et non consommée par les appareils électriques (AF) est utilisé pour alimenter au moins un appareil électrique (AV) apte à fonctionner sous une tension électrique variable, donc avec une puissance de consommation variable, comme par exemple une batterie électrique (B) dont l'intensité électrique moyenne de la charge peut être variable, ou un dispositif pour chauffer une réserve d'eau (L) grâce à au moins une résistance électrique (R) dont la puissance électrique moyenne de chauffe peut être variable, ou encore un dispositif de pompage d'eau dont le débit hydraulique peut être variable.

Mais si le surplus de puissance P3 est suffisamment stable, il peut aussi être utilisé pour alimenter un appareil supplémentaire de type (AF) à puissance d'alimentation fixe.

La puissance électrique moyenne extraite du surplus de puissance P3 à un instant t et dirigée par le dispositif (S) vers les appareils (AV, AF) fait alors augmenter la valeur P2 de la puissance instantanée consommée par tous les appareils électriques connectés, ce qui fait baisser la valeur du surplus P3 de puissance disponible à un instant ultérieur t + delta t, ce qui à son tour fait baisser la puissance de consommation variable (CV) des appareils (AV) aptes à fonctionner avec cette puissance de consommation variable (CV). On est alors en présence d'un asservissement qui met en place un équilibre dans lequel le surplus de puissance P3 est consommé en grande partie par lesdits appareils (AV) aptes à fonctionner avec une puissance de consommation variable (CV), cela sans modifier la consommation électrique des autres appareils (AF) qui sont en fonctionnement à cet instant t et dont la puissance de consommation est fixe.

On entend par « puissance variable », « tension variable », « intensité variable » des valeurs « efficaces » qui peuvent varier dans le temps. Ainsi une alimentation en tension sinusoïdale de 220 V efficace, bien que sinusoïdale, n'est ici considérée comme « variable » que si sa valeur « efficace » est variable. De même pour l'intensité et la puissance.

Dans un mode de réalisation particulier du dispositif (S) selon l'invention, certains appareils électriques (AV) qui sont aptes à fonctionner sous une tension et/ou une intensité électrique variable, donc avec une puissance de consommation variable (CV), sont alimentés par une tension électrique de type PWM de modulation de largeur d'impulsion (« Pulse Width Modulation » en terminologie anglo-saxonne).

Le moyen (MP3) de détermination du surplus de puissance (P3) du dispositif de gestion (S) schématisé en figure 1 peut comprendre un micro calculateur électronique qui reçoit en entrée les informations analogiques d'au moins un capteur analogique (T1, T2, T3). Ces capteurs (T1, T2, T3) transmettent, via des liens de communication (F1, F2, F3) schématisés par des traits interrompus, l'intensité électrique I(pe) issue du capteur témoin (V), l'intensité électrique I(pv) issue des panneaux photovoltaïques (PV), et l'intensité électrique I(pwm) correspondant au surplus P3 qui est variable et qui alimente des appareils électriques via l'onduleur (D), ces appareils pouvant être de type AF (puissance nominale fixe) ou de type AV (puissance nominale variable). Ces liens de communication (F1, F2, F3) peuvent bien entendu être filaires ou non filaires, par exemple par voie électromagnétique ou lumineuse.

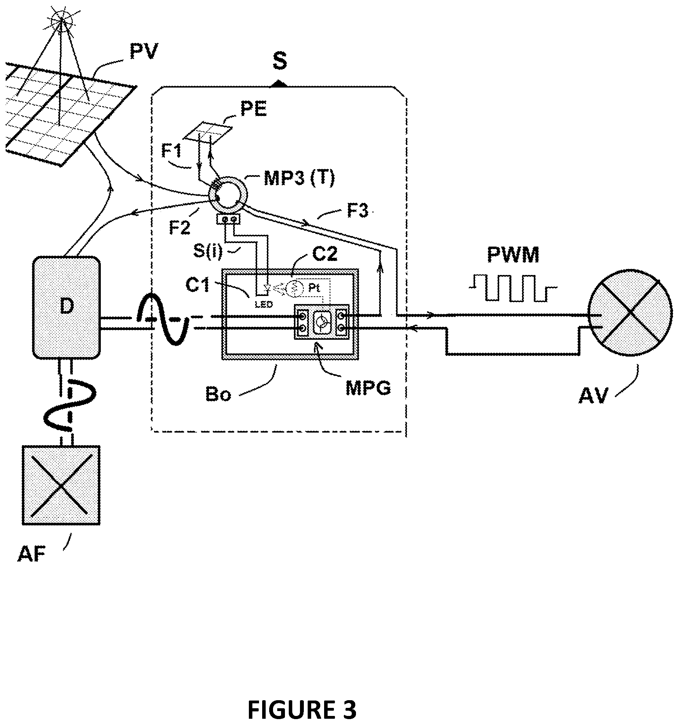

Le moyen (MP3) de détermination du surplus de puissance P3, qu'il s'agisse d'un micro calculateur ou d'un simple tore analogique comme représenté en figures 2 et 3, est configuré pour produire, à partir des valeurs transmises par les capteurs (T1, T2, T3), notamment des valeurs de courants électriques, un signal analogique ou numérique S(i) représentatif de la valeur du surplus (P3) de puissance disponible. Ce signal de sortie S(i) du circuit (MP3) est alors transmis à un émetteur (C1) qui le transmet à son tour à un récepteur (C2) par une liaison (Ls) de type galvanique, électromagnétique ou optique, schématisée par une flèche en figure 1.

Le récepteur (C2) est connecté à l'entrée d'un moyen (MPG) de gestion du surplus de puissance (P3) disponible, qui va notamment rediriger et répartir en temps réel le surplus de puissance (P3) disponible, vers les différents appareils électriques connectés, en particulier les appareils de type (AV) à puissance de consommation variable.

Selon un mode de réalisation basique, le signal S(i) fourni par le circuit (MP3) peut être un signal visuel ou sonore, et le moyen (MPG) de gestion du surplus de puissance (P3) disponible est alors constitué par une simple action manuelle d'un opérateur qui actionne un ou plusieurs interrupteurs pour rediriger le surplus de puissance (P3) disponible, vers tel ou tel appareil électrique (AF, AV) du système (G).

Selon un mode de réalisation automatisé et bien plus efficace, ledit moyen (MPG) de gestion du surplus (P3) de puissance disponible est constitué par un automatisme électronique asservi à la valeur instantanée du surplus (P3) de puissance disponible. Cet automatisme est alors configuré pour maximiser la puissance électrique (P2) consommée par les appareils électriques (AF, AV), et donc minimiser progressivement le surplus (P3) de puissance disponible.

Selon un aspect de l'invention, cet automatisme est conçu pour mettre en fonctionnement ou alimenter un ou plusieurs appareils (AF, AV) dont la puissance de consommation fixe ou variable est compatible avec la puissance (P3) disponible en surplus, et le choix du ou desdits appareils bénéficiant de tout ou partie du surplus de puissance (P3) pourra se faire en fonction d'une grille de priorités prédéfinie par l'utilisateur.

Selon un mode de réalisation avantageux en pratique, le moyen (MPG) de gestion du surplus de puissance (P3) disponible est configuré pour commander la modulation de la puissance d'alimentation des appareils à puissance variable (AV2) par un signal de commande modulé, par exemple par modulation de largeur d'impulsion (PWM).

D'un point de vue pratique, il est judicieux de mesurer lesdites intensités I(pe), I(pv) et I(pwm) par des capteurs (T1, T2, T3) constitués par un ou plusieurs tores à effet Hall, comme représenté dans les exemples de réalisation des figures 2 et 3.

Comme représenté en figure 2, on mesure l'intensité I(pv) du courant électrique qui est réellement produit par les panneaux photovoltaïques (PV) en utilisant un unique tore à effet Hall (T) qui entoure les fils électriques F2 en sortie des panneaux (PV). Cette information d'intensité I(pv) renseigne sur la puissance électrique P2 fournie à l'onduleur (D) et donc consommée par l'ensemble des appareils.

Par ailleurs, on mesure à l'aide du même tore (T) l'intensité du courant d'intensité I(pe) produit par le capteur témoin (PE) notamment sous la forme d'une surface PV témoin, et qui renseigne, par extrapolation, sur la puissance photovoltaïque potentielle maximale P1 que pourraient produire les panneaux solaires (PV) à un instant t.

Comme représenté en figure 2, le tore (T) est parcouru d'une part par un câble F1 connecté à la surface photovoltaïque témoin (PE =V) et qui présente éventuellement plusieurs enroulements autour du tore T, et d'autre part par un câble F2 connecté aux panneaux solaires photovoltaïques (PV). Dans ce cas, les deux câbles F1 et F2 sont respectivement parcourus par des courants électriques I(pe) et I(pv) qui circulent dans des sens opposés.

Le tore (T) délivre alors en sortie un signal S(i) proportionnel à la différence entre I(pe) et I(pv). Cette comparaison électronique équivaut à l'équation P3 = P1-P2. Le signal de sortie S(i) du tore (T) est représentatif de la puissance (P3) disponible en surplus et qui n'est pas consommée à l'instant t. Cette information S(i) est transmise à un émetteur (C1) qui la répercute à un récepteur (C2) d'une manière électrique, optique ou électromagnétique. Le récepteur (C2) transmet l'information S(i) au circuit (MPG) de gestion du surplus (P3) qui peut alors fournir une tension de sortie pour actionner graduellement par variation de la tension (éventuellement de type PWM - « Pulse Width Modulation ») ou par variation de l'intensité, l'alimentation électrique d'une ou de plusieurs charges résistives comme par exemple une résistance chauffante (R) pour chauffer une réserve d'eau (L) ou la charge d'une batterie (B) de type AF.

La puissance consommée par les appareils qui bénéficient d'une alimentation électrique commandée par le circuit (MPG) correspond alors au surplus (P3) d'énergie photovoltaïque disponible en temps réel, de sorte que ledit surplus d'énergie (P3) est utilisé en totalité ou en partie, par exemple par les appareils (AV) à puissance de consommation variable sans modifier le fonctionnement en cours des appareils AF à puissance de consommation fixe.

Dans un autre mode de réalisation particulier correspondant à la figure 3, le moyen (MP3) de détermination du surplus (P3) de puissance disponible comporte encore un tore unique (T) sur lequel sont enroulés trois câbles F1, F2, F3, positionnés de manière que :
- Le câble F1 soit parcouru par un courant I(pe) circulant en sens direct produit par la surface photovoltaïque témoin (PE = V) ;
- Le câble F2 soit parcouru par un courant I(pv) circulant en sens inverse produit par les panneaux solaires (PV) qui alimentent l'ensemble des appareils électriques,
- Le câble F3 soit parcouru par un courant I1(pwm) circulant en sens direct et correspondant à la production du surplus (P3) consommé par les appareils (AV) à un instant t1,-
- Le câble F3 soit parcouru aussi par un courant I2(pwm) circulant en sens direct et correspondant à la production du surplus (P3) consommé par les appareils (AV) à un instant t1 + delta t.

Il résulte de cette combinaison un asservissement qui est modélisé par l'équation : I(pe) - I(pv) = I1(pwm) - I2(pwm) dans laquelle :
I(pe) = Intensité produite par la surface photovoltaïque témoin (V)
I(pv) = Intensité produite par les panneaux solaires (PV) qui alimentent l'ensemble des appareils électriques
I1(pwm) = Intensité consommée par les appareils (AV) à un instant t1
I2(pwm) = Intensité consommée par les appareils (AV) à un instant t1 + delta t
On observe que lorsque I(pe) = I(pv), on a une stabilité et I1(pwm) = I2(pwm)

L'intensité électrique supplémentaire consommée I1(pwm) et extraite du surplus (P3) fait alors augmenter la valeur de la puissance (P2) consommée à l'instant t, ce qui à son tour fait baisser la valeur du surplus de puissance (P3) disponible à l'instant t + delta t. Cela correspond à un asservissement qui met en place un équilibre dans lequel le surplus de puissance (P3) disponible tend à disparaître, au profit d'une augmentation de la consommation (P2) des appareils.

Dans l'exemple de réalisation représenté en figure 3, l'émetteur (C1) auquel est transmis le signal S(i) en sortie du tore (T) constituant le moyen (MP3) de détermination du surplus (P3) de puissance disponible est constitué par une simple diode LED dont la luminosité varie par conséquent en fonction du surplus (P3) disponible à chaque instant t. Le récepteur (C2) est constitué par une simple photorésistance dont la résistance varie en fonction de l'intensité lumineuse reçue en provenance de la LED (C1).

L'émetteur (C2) fonctionne alors comme un potentiomètre connecté en entrée du circuit (MPG) de gestion du surplus (P3). Celui-ci commande la délivrance par l'onduleur (D) d'un surplus de puissance (P3) qui peut varier dans un intervalle compris entre zéro et P1, (P3 = zéro correspondant à une consommation par les appareils électriques déjà connectés de l'intégralité de la puissance (P1) potentielle délivrée à cet instant par les panneaux photovoltaïques (PV)), et P3 = P1 correspondant à l'absence de consommation des appareils électriques connectés, c'est-à-dire P2 = 0.

Dans ce mode de réalisation pratique, les composants (C1), (C2) et (MPG) sont de préférence enfermés dans un boitier opaque (Bo) afin de ne pas parasiter la transmission optique entre la LED (C1) et la photorésistance (C2) avec la lumière ambiante.

Dans un autre mode de réalisation particulier, les intensités électriques I(pe) et I(pv) peuvent être comparées mathématiquement au moyen d'un automate programmable (non représenté) qui fournit en sortie un signal électrique S(i) numérique ou analogique, représentatif du surplus (P3) de puissance disponible à l'instant t et non utilisée.

L'invention permet de fournir un supplément de puissance électrique d'origine photovoltaïque dans un grand nombre d'applications potentielles. L'intérêt est de consommer le maximum du surplus (P3) d'électricité disponible en fonction de l'évolution des conditions d'ensoleillement des panneaux photovoltaïques. Pour cela la technique de la modulation PWM (Pulse Wave Modulation) est idéale, mais nécessite des applications qui soient compatibles avec des puissances de consommation variables.

Cela est notamment le cas pour des groupes de refroidissement d'air qui utilisent déjà la technique de modulation PWM, ou encore des générateurs d'eau atmosphérique, ou des systèmes de refroidissement par cellules thermoélectriques.

Dans le cas où le supplément (P3) de puissance est utilisé pour charger une batterie électrique (B), celle-ci peut être de type "tampon" dans le but de stocker le surplus de l'énergie solaire et qui servira ensuite par exemple à la charge d'un véhicule électrique.

### EXEMPLE DE REALISATION

Un système de générateur photovoltaïque (G) comprend :
a. 28 panneaux (PV) de 360 W crête soit une puissance crête totale d'environ 10 kWc et une surface totale de 60 m²
b. 2 onduleurs hybrides (D) de 5 kW de puissance montés en parallèle
c. 2 batteries lithium Ion (B) de 2,4 kWh, soit un total de 4,8 kWh
d. plusieurs appareils électriques (AF) à puissance efficace de fonctionnement fixe (machine à laver, ordinateur, réfrigérateur, sèche-linge, four à micro-onde)
e. plusieurs appareils (AV) à puissance efficace variable (Lampes LED « dimmable », chauffe-eau électrique à résistance thermique, radiateurs électriques et ventilateurs compatibles PWM, pompe à eau de piscine, batterie de voiture)
f. un dispositif (S) de mesure et/ou de calcul de l'énergie photovoltaïque disponible en surplus et comprenant un petit panneau solaire photovoltaïque témoin (V) de 12 V et de 3 Watts de puissance crête qui fait 180 cm² de surface et est orienté de la même manière que les panneaux solaires (PV), à savoir au Sud avec une inclinaison de 30 degrés par rapport au sol.

Le rapport de surface entre les panneaux solaires (60 m²) et la surface photovoltaïque réduite (180 cm²) vaut environ 3300. Ainsi lorsque la surface photovoltaïque témoin (V) produira une puissance instantanée de 1 W cela indiquera que les panneaux solaires (PV) pourront produire à ce moment jusqu'à 3300 W.

L'intensité électrique globale Ipv qui est produite par les panneaux (PV) est mesurée par un capteur torique à courant continu qui délivre une intensité proportionnelle à l'intensité mesurée et qui est de 10 mA par ampère.

L'intensité électrique Iv produite par la surface photovoltaïque témoin (V) est sensiblement proportionnelle à l'irradiation solaire du moment donc sensiblement proportionnelle à la puissance maximum de production des panneaux solaires (PV).

Les intensités Ipv et Iv sont comparées par un tore à effet Hall qui délivre en sortie un signal électrique S(i) qui vaut sensiblement Ipe - Ipv. Ce signal S(i) représente en valeur proportionnelle l'énergie photovoltaïque disponible qui n'est pas consommée par les appareils électriques (AF et AV) à l'instant considéré. Ce signal S(i) commande un variateur de puissance de type PWM branché sur le ballon d'eau chaude de l'habitation de sorte que plus le signal S(i) est fort et plus le variateur de puissance augmente la puissance d'alimentation du chauffe-eau électrique dans un intervalle de 0 à 2 kW. Une sonde de température coupe cette alimentation dès que la température du ballon atteint 80°C.

De même, et en parallèle avec l'alimentation électrique du chauffe-eau, la batterie de la voiture électrique est chargée avec une intensité qui est proportionnelle à Iv, c'est-à-dire proportionnelle à l'énergie photovoltaïque disponible sur le moment. Le fait d'augmenter l'énergie produite par les panneaux (PV) (et donc consommée par les appareils) fait augmenter l'intensité Ipv qui fait diminuer la résultante S(i) qui fait à son tour diminuer la commande du variateur de puissance PWM. Cette régulation aboutit à un bilan énergétique qui montre une consommation électrique totale des appareils connectés supérieure à ce qui aurait été si le dispositif de mesure (S) selon l'invention n'avait pas été présent. En effet par faible ensoleillement la puissance maximum des panneaux (PV) était par exemple de 4,5 kW avec la machine à laver, le réfrigérateur et le sèche-linge qui en consommaient 3,5 kW. Le surplus de 1 kW n'était pas utilisable car dans sa version standard le chauffe-eau consommerait 2 kW et la batterie de la voiture 1,5 kW. Grâce au dispositif (S) selon l'invention le surplus de 1 kW a été distribué graduellement par le générateur de puissance variable PWM au chauffe-eau et à la batterie.

Il est estimé que sur une année le supplément énergie solaire capturée et utilisée de la sorte peut avoisiner au moins 25% à 35 %, sans avoir à augmenter le dimensionnement des panneaux photovoltaïques.

### AVANTAGES DE L'INVENTION

En définitive l'invention répond bien aux buts fixés. Elle est d'une mise en oeuvre particulièrement simple et économique, n'utilisant que quelques composants peu coûteux : une petite surface photovoltaïque témoin, un tore à courant continu, quelques résistances, une LED, une photorésistance, éventuellement un microcontrôleur.

L'invention permet de récupérer, utiliser ou stocker davantage d'énergie qu'en l'absence du dispositif (S) permettant d'utiliser un surplus de puissance disponible, ce qui peut conduire soit à produire et utiliser plus d'énergie électrique à partir d'un dimensionnement donné d'un générateur photovoltaïque (G), soit de proposer un dimensionnement plus modeste et moins coûteux d'une installation photovoltaïque, compte tenu du rendement accru de production d'énergie électrique.

L'invention est particulièrement bien adaptée à un dispositif (G) de production d'énergie photovoltaïque qui n'est pas relié à un réseau électrique public, pour lequel l'état de la technique ne permet pas de déterminer et d'exploiter un surplus de puissance photovoltaïque. Cette situation est encore largement le cas dans un grand nombre de pays en développement, voire se répand dans les pays développés dans une population en recherche d'autonomie énergétique.

### Rappel des abréviations et références :

- PE:: capteur photoélectrique témoin
- V:: capteur témoin de type photovoltaïque
- PV:: panneaux photovoltaïques
- MP3:: Moyen de détermination d'un surplus (P3) de puissance disponible
- C1:: émetteur
- C2:: récepteur
- B:: batterie
- AF:: appareil électrique à puissance d'alimentation fixe
- AV:: appareil électrique à puissance d'alimentation variable
- MPG:: Moyen de gestion d'un surplus (P3) de puissance disponible
- PWM:: modulation de largeur d'impulsion
- L :: ballon d'eau chaude
- R:: résistance du ballon d'eau chaude
- F1, F2, F3:: liaisons électriques filaires ou non
- P1:: puissance maximale potentielle des panneaux photovoltaïques
- P2 :: puissance réelle consommée par les appareils électriques
- P3:: surplus de puissance électrique disponible pouvant être fournie par les panneaux PV et non consommée
- P4:: puissance électrique fournie par le capteur témoin PE, V
- S(i):: signal représentatif d'un surplus (P3) de puissance
- I(pv) :: courant électrique issu des panneaux (PV)
- I(pe), I(v) :: courant électrique issu du capteur témoin (PE) ou (V)
- I(pwm) :: courant de surplus parcourant les appareils électriques AV

## Revendications

1. Dispositif (S) de gestion d'un surplus (P3) de puissance photovoltaïque disponible aux bornes d'un générateur photovoltaïque (DE) pourvu de panneaux photovoltaïques (PV) susceptibles d'alimenter des appareils électriques (AF) à puissance fixe et des appareils électriques (AV) à puissance variable connectés audit générateur photovoltaïque (DE), ledit surplus de puissance (P3) étant égal à la différence à chaque instant t entre la puissance électrique maximale potentielle (P1) que pourrait produire ledit générateur photovoltaïque (DE) compte tenu de son éclairage et la puissance électrique (P2) réellement consommée à chaque instant t par lesdits appareils électriques (AF, AV), **caractérisé en ce qu'**il comporte :
- un capteur photoélectrique témoin (PE) apte à mesurer à chaque instant t l'intensité lumineuse solaire reçue par lesdits panneaux photovoltaïques (PV) pour en déduire ladite puissance électrique maximale potentielle (P1) ;
- un moyen (MP3) de détermination du surplus de puissance (P3) disponible par comparaison à cet instant t entre la valeur de la puissance électrique maximale potentielle (P1) et la valeur de la puissance électrique (P2) réellement consommée par lesdits appareils électriques (AF ; AV), ledit moyen (MP3) comprenant un micro calculateur électronique recevant en entrée les informations analogiques d'au moins un capteur analogique (T1, T2, T3) pourvu d'un tore à effet Hall ;
- et un moyen (MPG) de gestion dudit surplus de puissance (P3) disponible, configuré pour rediriger et répartir entre lesdits appareils électriques (AF, AV) ledit surplus de puissance (P3) disponible, de façon à maximiser l'usage dudit surplus de puissance (P3) disponible aux bornes du générateur photovoltaïque (DE).

2. Dispositif (S) selon la revendication 1, **caractérisé en ce que** ledit moyen (MPG) de gestion du surplus de puissance (P3) est configuré pour commander la mise en service et l'alimentation en électricité d'au moins un appareil électrique (AF) supplémentaire, ou l'augmentation de la consommation d'un appareil électrique (AF, AV) déjà connecté au générateur photovoltaïque (DE).

3. Dispositif (S) selon la revendication 1 ou la revendication 2, **caractérisé en ce que** ledit capteur photoélectrique témoin (PE) est configuré pour mesurer l'intensité lumineuse solaire reçue par lesdits panneaux photovoltaïques (PV) et pour produire un courant électrique proportionnel à ladite intensité lumineuse et donc proportionnel à la puissance maximale potentielle (P1) que pourrait produire le générateur photovoltaïque (DE) à chaque instant t.

4. Dispositif (S) selon l'une quelconque des revendications précédentes, **caractérisé en ce que** ledit capteur photoélectrique témoin (PE) est une photorésistance, un phototransistor, une photodiode, un pyranomètre, ou une surface photovoltaïque témoin (V).

5. Dispositif (S) selon la revendication 4, **caractérisé en ce que** ledit capteur photoélectrique témoin (PE) est constitué par une surface photovoltaïque (V) formée par une seule cellule photovoltaïque ou par plusieurs cellules photovoltaïques connectées en série ou en parallèle, de taille globale inférieure à celle desdits panneaux photovoltaïques (PV), et orientée parallèlement à la surface des panneaux photovoltaïques (PV) de manière à recevoir la même intensité lumineuse que les panneaux photovoltaïques (PV) et à produire une puissance électrique (P4) représentative de leur puissance maximale potentielle (P1).

6. Dispositif (S) selon la revendication 5, **caractérisé en ce que** la puissance (P4) mesurée aux bornes de ladite surface photovoltaïque témoin (V) et la puissance maximale potentielle calculée (P1) des panneaux solaires (PV) sont liées par une relation mathématique de type : P1 = (x. P4) + z, x et z étant des valeurs fixes dépendantes des caractéristiques géométriques et photoélectriques des panneaux (PV) et de ladite surface photovoltaïque témoin (V).

7. Dispositif (S) selon l'une quelconque des revendications précédentes, **caractérisé en ce que** ledit au moins un capteur analogique (T1, T2, T3) pourvu d'un tore à effet Hall est positionné de manière à capter les intensités électriques I(pe), I(pv) et I(pwm) qui parcourent respectivement le capteur témoin (PE), les panneaux photovoltaïques (PV) et les appareils électriques (AF, AV), ledit micro calculateur électronique (MP3) étant configuré pour produire un signal analogique ou numérique S(i) représentatif de la valeur du surplus de puissance (P3) disponible.

8. Dispositif (S) selon l'une des revendications précédentes, **caractérisé en ce que** ledit moyen (MP3) de détermination du surplus de puissance (P3) disponible à chaque instant t comprend un capteur analogique (T) constitué par un seul tore à effet Hall traversé à la fois par un premier conducteur électrique (F2) issu des panneaux photovoltaïques (PV) et parcouru par un courant électrique I(pv), et par un second conducteur électrique (F1) issu du composant photoélectrique témoin (PE) et parcouru par un courant I(p) produit par ledit composant photoélectrique (PE) mesurant la luminosité solaire, ledit tore (T) à effet Hall produisant en sortie un signal électrique S(i) représentatif du surplus de puissance (P3) disponible à chaque instant t.

9. Dispositif (S) selon la revendication 8, **caractérisé en ce que** ledit tore (T) à effet Hall est en outre traversé par un troisième conducteur électrique (F3) parcouru par le courant I(pwm) d'alimentation des appareils électriques (AV) à puissance variable.

10. Dispositif (S) selon la revendication 8 ou la revendication 9, **caractérisé en ce que** ladite surface photovoltaïque témoin (V) est branchée aux extrémités d'un fil conducteur (F1) de préférence de faible résistance électrique et qui traverse ledit tore (T) en plusieurs enroulements au nombre de N, de sorte que l'intensité électrique I(p) qui parcourt ledit fil conducteur (F1) soit multipliée par N en sortie dudit tore (T).

11. Dispositif (S) selon l'une quelconque des revendications précédentes, **caractérisé en ce que** ledit moyen (MPG) de gestion du surplus de puissance (P3) disponible consiste en une action manuelle d'un opérateur en fonction d'une indication par le dispositif (S) de l'existence d'un surplus de puissance (P3) disponible.

12. Dispositif (S) selon l'une quelconque des revendications 1 à 10, **caractérisé en ce que** ledit moyen (MPG) de gestion du surplus de puissance (P3) disponible est constitué par un automatisme électronique asservi à la valeur instantanée du surplus de puissance (P3) disponible, ledit automatisme étant configuré pour minimiser le surplus (P3) de puissance électrique disponible et maximiser la puissance électrique (P2) consommée par les appareils électriques (AF, AV).

13. Dispositif (S) selon la revendication 12, **caractérisé en ce que** ledit automatisme est conçu pour mettre en fonctionnement ou alimenter un ou plusieurs appareils électriques (AF, AV) dont la puissance de consommation fixe ou variable est compatible avec le surplus (P3) de puissance disponible, et pour choisir les appareils bénéficiant de tout ou partie du surplus (P3) de puissance disponible, en fonction d'une grille de priorités prédéfinie par l'utilisateur.

14. Dispositif (S) selon l'une des revendications 11 à 13, **caractérisé en ce que** ledit moyen (MPG) de gestion du surplus (P3) de puissance disponible comporte un circuit de commande des appareils électriques à puissance variable (AV) recevant la valeur du surplus (P3) de puissance disponible, via un émetteur (C1) et un récepteur (C2) intégrés au dispositif (S) et connectés au moyen d'une liaison de communication de nature électrique, électromagnétique ou lumineuse.

15. Dispositif (S) selon la revendication 14, **caractérisé en ce que** ledit circuit de commande du moyen (MPG) de gestion du surplus (P3) de puissance disponible est configuré pour commander la modulation de la puissance d'alimentation des appareils à puissance variable (AV), par exemple par modulation de largeur d'impulsion (PWM).

16. Système (G) comportant un générateur photovoltaïque (DE) pourvu de panneaux photovoltaïques (PV) alimentant des appareils électriques (AF) à puissance fixe ou des appareils électriques (AV) à puissance variable, **caractérisé en ce qu'**il comporte un dispositif (S) de gestion d'un surplus (P3) de puissance photovoltaïque disponible aux bornes d'un générateur photovoltaïque conforme à l'une quelconque des revendications précédentes, de façon à maximiser l'utilisation d'un surplus (P3) de puissance photovoltaïque disponible à un instant t aux bornes dudit générateur photovoltaïque (DE).

17. Système (G) selon la revendication 16, **caractérisé en ce qu'**il comporte un onduleur (D) connecté entre les panneaux photovoltaïques (PV) et lesdits appareils électriques (AF, AV), et **en ce que** la sortie de l'onduleur (D) est connectée aux appareils électriques (AV) à puissance d'alimentation variable via ledit dispositif (S) de gestion du surplus (P3) de puissance photovoltaïque, de sorte que les appareils électriques (AV) à puissance variable soient alimentés électriquement en fonction du surplus (P3) de puissance disponible à chaque instant t.

18. Système (G) selon la revendication 16 ou la revendication 17, **caractérisé en ce que** les composants dudit dispositif de gestion (S) du surplus (P3) de puissance disponible sont directement intégrés audit onduleur (D), à l'exception du capteur photoélectrique témoin (PE), qui reste exposé à la même lumière solaire que les panneaux photovoltaïques (PV).

19. Système (G) selon l'une des revendications 16 à 18, **caractérisé en ce que** les appareils électriques (AV) à puissance d'alimentation variable incluent des appareils de type pompes hydrauliques, résistances chauffantes, groupes frigorifiques, ventilateurs, générateurs d'eau atmosphérique, déshumidificateurs de locaux, batteries à flux Redox, batteries de véhicule électrique, piles à d'hydrogène.

20. Système (G) selon l'une des revendications 16 à 19, **caractérisé en ce qu'**il comporte un premier dispositif de type MPPT (« Maximum Power Point Tracking ») disposé entre les panneaux solaires (PV) et l'onduleur (D) et un second dispositif MPPT disposé entre le capteur photoélectrique témoin (PE) et le moyen (MP3) de détermination du surplus (P3) de puissance disponible.

21. Système (G) selon l'une des revendications 16 à 20, **caractérisé en ce qu'**au moins l'un desdits appareils électriques est pour une partie de type (AF) à puissance d'alimentation fixe et pour une autre partie de type (AV) à puissance d'alimentation variable, comme par exemple un générateur d'eau atmosphérique comprenant en partie un déshumidificateur atmosphérique qui condense l'eau atmosphérique dans un réservoir et qui fonctionne en mode (AV) d'alimentation à puissance variable, et comprenant pour une autre partie un système de filtration et de purification de l'eau recueillie dans ledit réservoir, et qui fonctionne en mode (AF) d'alimentation à puissance fixe.

22. Système (G) selon l'une quelconque des revendications 16 à 21, **caractérisé en ce que** lesdits appareils électriques (AF, AV) sont dimensionnés de façon à pouvoir consommer toute la puissance électrique potentielle (P1) produite par les panneaux photovoltaïques (PV), y compris le surplus de puissance (P3) disponible à chaque instant t.

23. Système (G) selon l'une des revendications 16 à 22, **caractérisé en ce qu'**il est disposé soit en un site isolé sans possibilité de transfert de courant électrique avec un réseau public de distribution d'énergie électrique, soit connecté à un réseau public de distribution d'énergie électrique pour permettre au besoin la réception d'un complément d'électricité de la part du réseau public de distribution d'énergie électrique ou l'injection dans ledit réseau public de tout ou partie dudit surplus de puissance (P3) mesuré ou calculé par ledit dispositif de gestion (S).

24. Dispositif onduleur apte à transformer un courant continu délivré par un générateur photovoltaïque en un courant alternatif destiné à alimenter des appareils électriques (AF, AV), **caractérisé en ce qu'**il intègre un dispositif (S) de gestion du surplus (P3) de puissance disponible conforme à l'une quelconque des revendications 1 à 15.

25. Procédé de gestion d'un surplus (P3) de puissance électrique disponible
aux bornes d'un générateur photovoltaïque, utilisant un dispositif de gestion selon la revendication 1, **caractérisé en ce qu'**il comporte des étapes consistant à :
- Déterminer la puissance maximale potentielle (P1) pouvant être délivrée par ledit générateur photovoltaïque à chaque instant t, en fonction de l'ensoleillement reçu à cet instant ;
- Déterminer la puissance (P2) consommée à l'instant t par l'ensemble des appareils électriques (AF, AV) connectés audit générateur photovoltaïque ;
- Déterminer un surplus de puissance (P3) disponible à l'instant t, correspondant à la différence P1 - P2 ;
- Dans le cas d'une valeur de surplus (P3) de puissance disponible positive, mettre en service et/ou alimenter électriquement au moins un appareil électrique de façon à maximiser la valeur de la puissance (P2) consommée et minimiser la valeur du surplus (P3) de puissance disponible à un instant ultérieur t + delta t.

26. Procédé selon la revendication précédente, **caractérisé en ce qu'**il est mis en oeuvre à l'aide du dispositif (S) de gestion de surplus (P3) de puissance disponible selon l'une quelconque des revendications 1 à 15 ou à l'aide d'un système (G) selon l'une quelconque des revendications 16 à 23.

## Patentansprüche

1. Vorrichtung (S) zur Verwaltung eines Überschusses (P3) an Photovoltaikleistung, der an den Anschlüssen eines Photovoltaikgenerators (DE) verfügbar ist, der mit Photovoltaikpaneelen (PV) ausgestattet ist, die Elektrogeräte (AF) mit fester Leistung und Elektrogeräte (AV) die an den Photovoltaikgenerator (DE) angeschlossen sind mit Strom mit variabler Leistung versorgen können, wobei die überschüssige Leistung (P3) zu jedem Zeitpunkt t der Differenz zwischen der maximalen potenziellen elektrischen Leistung (P1), die von dem Photovoltaikgenerator (DE) erzeugt werden könnte bezüglich seiner Beleuchtung und der elektrischen Leistung (P2), die zu jedem Zeitpunkt t von den Elektrogeräten (AF, AV) tatsächlich verbraucht wird, **dadurch gekennzeichnet, dass** es Folgendes umfasst:
- einen photoelektrischen Kontrollsensor (PE), der in der Lage ist, zu jedem Zeitpunkt die von den Photovoltaikpaneelen (PV) empfangene Sonnenlichtintensität zu messen, um daraus die maximale potenzielle elektrische Leistung (P1) abzuleiten;
- ein Mittel (MP3) zur Bestimmung der überschüssigen Leistung (P3), die zu diesem Zeitpunkt t verfügbar ist, durch Vergleich zwischen dem Wert der maximal möglichen elektrischen Leistung (P1) und dem Wert der tatsächlich von den Elektrogeräten verbrauchten elektrischen Leistung (P2) ( AF; AV), wobei das Mittel (MP3) einen elektronischen Mikrocomputer umfasst, der als Eingabe analoge Informationen von mindestens einem analogen Sensor (T1, T2, T3) empfängt, der mit einem Hall-Effekt-Torus ausgestattet ist;
- und ein Mittel (MPG) zum Verwalten der verfügbaren überschüssigen Leistung (P3), das so konfiguriert ist, dass es die verfügbare überschüssige Leistung (P3) zwischen den elektrischen Geräten (AF, AV) umleitet und verteilt, um die Nutzung der überschüssigen Leistung (P3) die and an den Klemmen des Photovoltaikgenerators (DE) verfügbar ist, zu maximieren.

2. Vorrichtung (S) nach Anspruch 1, **dadurch gekennzeichnet, dass** das Mittel (MPG) zur Verwaltung überschüssiger Leistung (P3) dazu ausgelegt ist, die Inbetriebnahme und Stromversorgung mindestens eines zusätzliches Elektrogeräts (AF) oder die Erhöhung des Verbrauchs eines bereits an den Photovoltaikgenerator (DE) angeschlossenen Elektrogeräts (AF, AV).

3. Vorrichtung (S) nach Anspruch 1 oder Anspruch 2, **dadurch gekennzeichnet, dass** der photoelektrische Anzeigesensor (PE) so konfiguriert ist, dass er die von den Photovoltaikpaneelen (PV) empfangene Sonnenlichtintensität misst und einen zu dieser Licht Intensität proportionalen elektrischen Strom erzeugt und daher proportional zur maximalen potenziellen Leistung (P1), die der Photovoltaikgenerator (DE) zu jedem Zeitpunkt t erzeugen könnte.

4. Vorrichtung (S) nach einem der vorhergehenden Ansprüche, **dadurch gekennzeichnet, dass** der fotoelektrische Anzeigesensor (PE) ein Fotowiderstand, ein Fototransistor, eine Fotodiode, ein Pyranometer oder eine fotovoltaische Anzeigefläche (V) ist.

5. Vorrichtung (S) nach Anspruch 4, **dadurch gekennzeichnet, dass** der photoelektrische Steuersensor (PE) aus einer Photovoltaikfläche (V) besteht, die insgesamt aus einer einzelnen Photovoltaikzelle oder aus mehreren in Reihe oder parallel geschalteten Photovoltaikzellen besteht einer Größe kleiner als die der Photovoltaik-Paneele (PV) und parallel zur Oberfläche der Photovoltaik-Paneele (PV) ausgerichtet, um die gleiche Lichtintensität wie die Photovoltaik-Paneele (PV) zu empfangen und eine elektrische Leistung (P4) zu erzeugen die ihrer maximal möglichen Leistung (P1) darstellt.

6. Vorrichtung (S) nach Anspruch 5, **dadurch gekennzeichnet, dass** die an den Anschlüssen der Steuer-Photovoltaikfläche (V) gemessene Leistung (P4) und die berechnete maximale potenzielle Leistung (P1) der Solarpaneele (PV) miteinander verknüpft sind über eine mathematische Beziehung vom Typ: P1 = (x. P4) + z, wobei x und z feste Werte sind, die von den geometrischen und photoelektrischen Eigenschaften der Paneele (PV) und der besagten photovoltaischen Oberfläche (V) abhängen.

7. Vorrichtung (S) nach einem der vorhergehenden Ansprüche, **dadurch gekennzeichnet, dass** der mindestens eine mit einem Hall-Effekt-Torus versehene analoge Sensor (T1, T2, T3) so positioniert ist, dass er die elektrischen Intensitäten I (pe), I(pv) und I(pwm) erfasst, die jeweils durch den Anzeigesensor (PE), die Photovoltaikpaneele (PV) und die Elektrogeräte (AF, AV) laufen, wobei der elektronische Mikrocomputer (MP3) so konfiguriert ist, dass er ein analoges oder ein digitales Signal S(i) erzeugt, das den Wert der verfügbaren überschüssigen Leistung (P3) darstellt.

8. Vorrichtung (S) nach einem der vorhergehenden Ansprüche, **dadurch gekennzeichnet, dass** die Mittel (MP3) zur Bestimmung der zu jedem Zeitpunkt t verfügbaren überschüssigen Leistung (P3) einen analogen Sensor (T) umfassen, der aus einem einzelnen Torus mit Hall-Effekt besteht der von einem von den Photovoltaikmodulen (PV) kommenden ersten elektrischen Leiter (F2) gekreuzt ist und von einem elektrischen Strom I (pv) durchflossen wird, als auch von einem zweiten elektrischen Leiter (F1), der von der photoelektrischen Steuerkomponente (PE) kommt und der von einem von der photoelektrischen Komponente (PE) erzeugter Strom I(p) durchflossen wird der die Sonnenhelligkeit misst, wobei der Hall-Effekt-Torus (T) am Ausgang ein elektrisches Signal S(i) erzeugt, das die zu jedem Zeitpunkt t verfügbare überschüssige Leistung (P3) darstellt.

9. Vorrichtung (S) nach Anspruch 8, **dadurch gekennzeichnet, dass** der Hall-Effekt-Torus (T) außerdem von einem dritten elektrischen Leiter (F3) durchzogen ist, der vom Strom I (pwm) zur Versorgung der elektrischen Geräte (AV) mit variabler Leistung durchflossen wird.

10. Vorrichtung (S) nach Anspruch 8 oder Anspruch 9, **dadurch gekennzeichnet, dass** die photovoltaische Steuerfläche (V) mit den Enden eines leitenden Drahtes (F1) verbunden ist, der vorzugsweise einen geringen elektrischen Widerstand aufweist und durch den Torus (T) in mehreren N Wicklungen verläuft, so dass die elektrische Intensität I(p), die durch den leitfähigen Draht (F1) fließt, am Ausgang des Torus (T) mit N multipliziert wird.

11. Gerät (S) nach einem der vorhergehenden Ansprüche, **dadurch gekennzeichnet, dass** das Mittel (MPG) zur Verwaltung der verfügbaren überschüssigen Leistung (P3) aus einer manuellen Aktion eines Bedieners gemäß einer Angabe des Geräts (S) des Vorhandenseins eines Überschusses an verfügbarer Leistung (P3), besteht.

12. Vorrichtung (S) nach einem der Ansprüche 1 bis 10, **dadurch gekennzeichnet, dass** das Mittel (MPG) zur Verwaltung der verfügbaren überschüssigen Leistung (P3) aus einer elektronischen Automatisierung besteht, die an den Momentanwert der verfügbare überschüssigen Leistung (P3) gekoppelt ist, wobei die Automatisierung so konfiguriert ist, dass sie den Überschuss (P3) der verfügbaren elektrischen Leistung minimiert und die von den Elektrogeräten (AF, AV) verbrauchte elektrische Leistung (P2) maximiert.

13. Gerät (S) nach Anspruch 12, **dadurch gekennzeichnet, dass** die Automatisierung dazu ausgelegt ist, ein oder mehrere elektrische Geräte (AF, AV) zu betreiben oder mit Strom zu versorgen, deren fester oder variabler Leistungsverbrauch mit dem Überschuss (P3) der verfügbaren Leistung kompatibel ist, und die Geräte auszuwählen, die von der gesamten oder einem Teil des Überschusses (P3) der verfügbaren Leistung profitieren, gemäß einem vom Benutzer vordefinierten Prioritätsraster.

14. Vorrichtung (S) nach einem der Ansprüche 11 bis 13, **dadurch gekennzeichnet, dass** die Mittel (MPG) zur Verwaltung des Überschusses (P3) der verfügbaren Leistung einen Schaltkreis zur Steuerung von Elektrogeräten mit variabler Leistung (AV) umfassen, der den Wert (P3) der verfügbaren Leistung Überschuss bekommt über einen Sender (C1) und einen Empfänger (C2) die in das Gerät (S) integriert und über eine Kommunikationsverbindung elektrischer, elektromagnetischer oder leuchtender Art verbunden sind.

15. Vorrichtung (S) nach Anspruch 14, **dadurch gekennzeichnet, dass** die Steuerschaltung der Mittel (MPG) zur Verwaltung des Überschusses (P3) an verfügbarer Leistung so konfiguriert ist, dass sie die Modulation der Stromversorgung der Leistungsgeräte variabel (AV) steuert, beispielsweise durch Pulsweitenmodulation (PWM).

16. System (G), das einen mit Photovoltaikpaneelen (PV) ausgestatteten Photovoltaikgenerator (DE) umfasst, der Elektrogeräte (AF) mit fester Leistung oder Elektrogeräte (AV) mit variabler Leistung versorgt, **dadurch gekennzeichnet, dass** es eine Vorrichtung (S) umfasst für die Verwaltung eines Überschusses (P3) an Photovoltaikleistung, der an den Anschlüssen eines Photovoltaikgenerators gemäß einem der vorhergehenden Ansprüche verfügbar ist, um die Nutzung eines zu einem Zeitpunkt t an den Anschlüssen des Photovoltaikgenerator (DE) verfügbaren Überschusses (P3) an Photovoltaikleistung zu maximieren.

17. System (G) nach Anspruch 16, **dadurch gekennzeichnet, dass** es einen Wechselrichter (D) umfasst, der zwischen den Photovoltaikpaneelen (PV) und den elektrischen Geräten (AF, AV) angeschlossen ist, und dass der Ausgang des Wechselrichters (D) über die Einrichtung (S) zur Bewirtschaftung des Überschusses (P3) an Photovoltaikleistung mit den Elektrogeräten (AV) mit variabler Leistungsversorgung verbunden ist, so dass die Elektrogeräte (AV) mit variabler Leistung in Abhängigkeit vom Überschuss (P3) elektrisch versorgt werden der zu jedem Zeitpunkt t verfügbaren Leistung.

18. System (G) nach Anspruch 16 oder Anspruch 17, **dadurch gekennzeichnet, dass** die Komponenten der genannten Verwaltungsvorrichtung (S) des Überschusses (P3) an verfügbarer Leistung direkt in den genannten Wechselrichter (D) integriert sind, mit Ausnahme der photoelektrischer Sensor (PE), der weiterhin dem gleichen Sonnenlicht ausgesetzt ist wie die Photovoltaikmodule (PV).

19. System (G) nach einem der Ansprüche 16 bis 18, **dadurch gekennzeichnet, dass** die elektrischen Geräte (AV) mit variabler Stromversorgung Geräte wie Hydraulikpumpen, Heizwiderstände, Kühlaggregate, Ventilatoren, Generatoren für atmosphärisches Wasser, Raumentfeuchter, Redox-Flow-Batterien, Batterien für Elektrofahrzeuge, Wasserstoffzellen, umfassen.

20. System (G) nach einem der Ansprüche 16 bis 19, **dadurch gekennzeichnet, dass** es ein erstes Gerät vom Typ MPPT ("Maximum Power Point Tracking"), das zwischen den Solarpaneelen (PV) und dem Wechselrichter (D) angeordnet ist, und ein zweites MPPT-Gerät umfasst, angeordnet zwischen dem fotoelektrischen Anzeigesensor (PE) und den Mitteln (MP3) zur Bestimmung des Überschusses (P3) der verfügbaren Leistung.

21. System (G) nach einem der Ansprüche 16 bis 20, **dadurch gekennzeichnet, dass** mindestens eines der genannten elektrischen Geräte für einen Teil vom Typ (AF) mit fester Stromversorgung ist und für einen anderen Teil vom Typ (AV) mit variabler Leistung Versorgung ist, wie zum Beispiel einen atmosphärischen Wassergenerator, der teilweise aus einem atmosphärischen Entfeuchter besteht, der das atmosphärische Wasser in einem Tank kondensiert und im variablen Stromversorgungsmodus (AV) arbeitet, und zum anderen Teil aus einem System zur Filterung und Reinigung des gesammelten Wassers besteht in dem Tank, und das im festen Stromversorgungsmodus (AF) arbeitet.

22. System (G) nach einem der Ansprüche 16 bis 21, **dadurch gekennzeichnet, dass** die elektrischen Geräte (AF, AV) so dimensioniert sind, dass sie die gesamte potenzielle elektrische Leistung (P1) verbrauchen können, die von den Photovoltaikpaneelen erzeugt wird (PV), einschließlich der zu jedem Zeitpunkt t verfügbaren Überschussleistung (P3).

23. System (G) nach einem der Ansprüche 16 bis 22, **dadurch gekennzeichnet, dass** es entweder an einem isolierten Standort ohne Möglichkeit zur Übertragung von elektrischem Strom mit einem öffentlichen elektrischen Energieverteilungsnetz angeordnet oder an ein öffentliches elektrisches Energieverteilungsnetz angeschlossen ist um bei Bedarf den Empfang von zusätzlichem Strom aus dem öffentlichen Stromverteilungsnetz oder die Einspeisung der gesamten oder eines Teils der von der Verwaltungsvorrichtung (S) gemessenen oder berechneten überschüssigen Leistung (P3) in das öffentliche Netz zu ermöglichen.

24. Wechselrichtergerät, das in der Lage ist, einen von einem Photovoltaikgenerator gelieferten Gleichstrom in einen Wechselstrom umzuwandeln, der zur Versorgung von Elektrogeräten (AF, AV) bestimmt ist, **dadurch gekennzeichnet, dass** es eine Vorrichtung (S) zur Verwaltung der überschüssigen (P3) verfügbaren Leistung integriert nach einen der Ansprüche 1 bis 15.

25. Verfahren zur Verwaltung eines Überschusses (P3) an elektrischer Leistung, der an den Anschlüssen eines Photovoltaikgenerators verfügbar ist, unter Verwendung einer Verwaltungsvorrichtung nach Anspruch 1, **dadurch gekennzeichnet, dass** es Schritte umfasst, die aus Folgendem bestehen:
- Bestimmung der maximalen potenziellen Leistung (P1), die der Photovoltaikgenerator zu jedem Zeitpunkt t liefern kann, abhängig von der zu diesem Zeitpunkt empfangenen Sonneneinstrahlung;
- Bestimmung der Leistung (P2), die zum Zeitpunkt t von allen an den Photovoltaikgenerator angeschlossenen elektrischen Geräten (AF, AV) verbraucht wird;
- Bestimmung eines Überschusses an Leistung (P3), der zum Zeitpunkt t verfügbar ist, entsprechend der Differenz P1 - P2;
- Im Falle eines positiven Überschusswerts (P3) der verfügbaren Leistung mindestens ein elektrisches Gerät aktivieren und/oder mit Strom versorgen, um den Wert der verbrauchten Leistung (P2) zu maximieren und den Wert des an einem späteren Zeitpunkt t + delta t verfügbaren Überschusses (P3) zu minimieren.

26. Verfahren nach dem vorhergehenden Anspruch, **dadurch gekennzeichnet, dass** es mit der Vorrichtung (S) zur Verwaltung überschüssiger verfügbarer Leistung (P3) nach einem der Ansprüche 1 bis 15, oder mit einem System (G) nach einem der Ansprüche 16 bis 23 durchgeführt wird.

## Claims

1. A device (S) for managing a surplus (P3) of photovoltaic power available at the terminals of a photovoltaic generator (DE) provided with photovoltaic panels (PV) that are capable of supplying power to fixed-power electrical appliances (AF) and variable-power electrical appliances (AV) connected to said photovoltaic generator (DE), said surplus of power (P3) being equal to the difference at each time t between the maximum potential electrical power (P1) that said photovoltaic generator (DE) could produce taking into account its illumination, and the electrical power (P2) actually consumed at each time t by said electrical appliances (AF, AV), wherein said device (S) includes:
- a photoelectric control sensor (PE) that is able to measure at each time t the solar light intensity received by said photovoltaic panels (PV) and to deduce therefrom said maximum potential electrical power (P1);
- a means (MP3) for determining said surplus of available power (P3), compared at this time t, between the value of the maximum potential electrical power (P1) and the value of the electrical power (P2) actually consumed by said electrical appliances (AF; AV);
- and a means (MPG) for managing said surplus of available power (P3), said means (MPG) being configured to redirect and distribute said surplus of available power (P3) between said electrical appliances (AF, AV).

2. A device (S) according to claim 1, wherein said means (MPG) for managing said surplus of power (P3) is configured to control the putting into operation of and the supply of electricity to at least one additional electrical appliance (AF), or the increase in the consumption of an electrical appliance (AF, AV) that is already connected to said photovoltaic generator (DE).

3. A device (S) according to claim 1 or 2, wherein said photoelectric control sensor (PE) is configured to measure the solar light intensity received by said photovoltaic panels (PV) and to produce an electrical current that is proportional to said light intensity and therefore proportional to the maximum potential power (P1) that said photovoltaic generator (DE) could produce at each time t.

4. A device (S) according to any one of the preceding claims, wherein said photoelectric control sensor (PE) is composed of a photoresistor, a phototransistor, a photodiode, a pyranometer, or preferably of a photovoltaic control surface (V).

5. A device (S) according to claim 4, wherein said photoelectric control sensor (PE) is composed of a photovoltaic surface (V) formed by a single photovoltaic cell or by a plurality of photovoltaic cells connected in series or in parallel, with an overall size of less than that of said photovoltaic panels (PV), and oriented parallel to the surface of said photovoltaic panels (PV) so as to receive the same light intensity as said photovoltaic panels (PV) and to produce an electrical power (P4) that is representative of the maximum potential power (P1) of said photovoltaic panels (PV).

6. A device (S) according to claim 5, wherein said electrical power (P4) measured at the terminals of said control sensor of photovoltaic type (V) and said calculated maximum potential power (P1) of the solar panels (PV) are linked by a mathematical relationship of the type: P1 = (x. P4) + z, x and z being fixed values dependent on the geometric and photoelectric characteristics of the panels (PV) and of said control photovoltaic surface (V).

7. A device (S) according to any one of the preceding claims, wherein said at least one analog sensor (T1, T2, T3) provided with a Hall- effect toroid is positioned so as to sense the electrical intensities I(pe), I(pv) and I(pwm) which flow respectively through said control sensor (PE), photovoltaic panels (PV) and electrical appliances (AF, AV), said electronic microcomputer (MP3) being configured to produce an analog or digital signal S(i) that is representative of the value of said surplus (P3) of available power.

8. A device (S) according to any one of preceding claims, wherein said means (MP3) for determining the surplus of power (P3) available at each time t comprises an analog sensor (T) composed of a single Hall-effect toroid that is simultaneously passed through by a first electrical conductor (F2) coming from the photovoltaic panels (PV) and flown through by an electrical current I(pv), and by a second electrical conductor (F1) coming from the photoelectric control component (PE) and flown through by a current I(p) produced by said photoelectric component (PE) measuring the solar luminosity, said Hall-effect toroid (T) then producing, at output, an electrical signal S(i) that is representative of the surplus of power (P3) available at each time t.

9. A device (S) according to claim 8, wherein said Hall-effect toroid (T) is furthermore passed through by a third electrical conductor (F3) flown through by the current I(pwm) for supplying power to the variable-power electrical appliances (AV).

10. A device (S) according to claim 8 or claim 9, wherein said photovoltaic control surface (V) is connected to the ends of a conductive wire (F1) preferably of low electrical resistance and comprising N windings, and which passes through said toroid (T) so that the electrical intensity I(p) which flows through said conductive wire (F1) is multiplied by N at the output of said toroid (T).

11. A device (S) according to any one of preceding claims, wherein said means (MPG) for managing the surplus of available power (P3) involves a manual action from an operator according to an indication by the device (S) of the existence of a surplus of available power (P3).

12. A device (S) according to anyone of claims 1 to 10, wherein said means (MPG) for managing the surplus of available power (P3) is composed of an electronic automatic controller which controls the instantaneous value of the surplus of available power (P3), said automatic controller being configured to minimize the surplus (P3) of available electrical power and to maximize the electrical power (P2) consumed by the electrical appliances (AF, AV).

13. Device (S) according to claim 12, wherein said automatic controller is designed to put into operation or to supply power to one or more electrical appliances (AF, AV) the fixed or variable power consumption of which is compatible with the surplus (P3) of available power, and to choose the appliances receiving all or some of the surplus (P3) of available power, according to a grid of priorities predefined by the user.

14. A device (S) according to any one of claims 11 to 13, wherein said means (MPG) for managing the surplus (P3) of available power includes a circuit for controlling the variable-power electrical appliances (AV) receiving the value of the surplus (P3) of available power, via an emitter (C1) and a receiver (C2) that are integrated in the device (S) and connected by means of an electrical, electromagnetic or light-based communication link.

15. A device (S) according to claim 14, wherein said circuit for controlling said means (MPG) for managing the surplus (P3) of available power is configured to control the modulation of the power supply to the variable-power appliances (AV), for example by pulse-width modulation (PWM).

16. A system (G) including a photovoltaic generator (DE) provided with photovoltaic panels (PV) supplying power to fixed-power electrical appliances (AF) or to variable-power electrical appliances (AV), wherein said system (G) includes a device (S) according to any one of preceding claims for managing a surplus (P3) of photovoltaic power available at the terminals of a photovoltaic generator so as to maximize the use of a surplus (P3) of photovoltaic power available at a time t at the terminals of said photovoltaic generator (DE).

17. A system (G) according to claim 16, including an inverter (D) connected between the photovoltaic panels (PV) and said electrical appliances (AF, AV), and the output of the inverter (D) is connected to the variable-power-supply electrical appliances (AV) via said device (S) for managing the surplus (P3) of available photovoltaic power such that the variable-power electrical appliances (AV) are supplied with electrical power according to the surplus (P3) of power available at each time t.

18. A system (G) according to claim 16 or 17, wherein the components of said device (S) for managing the surplus (P3) of power are integrated directly in said inverter (D), with the exception of the photoelectric control sensor (PE) which remains exposed to the same sunlight as the photovoltaic panels (PV).

19. A system (G) according to any one of claims 16 to 18, wherein the variable-power-supply electrical appliances (AV) include appliances of the following types: hydraulic pumps, heating resistors, refrigerating units, fans, atmospheric water generators, room dehumidifiers, redox-flow batteries, electric-vehicle batteries, and hydrogen fuel cells.

20. A system (G) according to any one of claims 16 to 19, including a first device of MPPT ("Maximum Power Point Tracking") type arranged between the solar panels (PV) and the inverter (D), and a second MPPT device arranged between the photoelectric control sensor (PE) and the means (MP3) for determining the surplus (P3) of available power.

21. A system (G) according to any one of claims 16 to 20, wherein at least one of said electrical appliances is, for one part, of fixed-power-supply type (AF) and, for another part, of variable-power-supply type (AV), such as, for example, an atmospheric water generator comprising, for one part, an atmospheric dehumidifier which condenses atmospheric water into a tank and which operates in variable-power-supply mode (AV), and comprising, for another part, a system for filtering and purifying the water collected in said tank and which operates in fixed-power-supply mode (AF).

22. A system (G) according to any one of claims 16 to 21, wherein said electrical appliances (AF, AV) are dimensioned so as to be able to consume all of the potential electrical power (P1) produced by the photovoltaic panels (PV), including the surplus (P3) of power available at each time t.

23. A system (G) according to any one of claims 16 to 22, arranged either on an off-grid site without the possibility of transferring electrical current with a public electrical energy distribution grid, or connected to a public electrical energy distribution grid so as to make it possible to receive, as required, additional electricity from the public electrical energy distribution grid or to inject into said public grid all or some of said surplus (P3) of power measured or calculated by said managing device (S).

24. An inverter able to transform a DC current delivered by a photovoltaic generator into an AC current intended to supply power to electrical appliances (AF, AV), said inverter having a device (S) according to any one of claims 1 to 15 integrated therein for managing a surplus (P3) of available power.

25. A method for managing a surplus (P3) of electrical power available at the terminals of a photovoltaic generator using a device (S) according to claim 1, including steps consisting in:
- Determining a maximum potential power (P1) that is able to be delivered by said photovoltaic generator at each time t, according to the sunlight received at this time;
- Determining the power (P2) consumed at the time t by the group of the electrical appliances (AF, AV) connected to said photovoltaic generator;
- Determining a surplus (P3) of power available at the time t, corresponding to the difference P1 - P2;
- In the case of a positive value of the surplus (P3) of available power, putting into operation and/or supplying electrical power to at least one electrical appliance so as to maximize the value of said power (P2) consumed and to minimize the value of said surplus (P3) of power available at a later time t + delta t.

26. A method according to claim 25, implemented by using the device (S) for managing excess power (P3) available according to any one of claims 1 to 15 or by using a system (G) according to any one of claims 16 to 23.
